# EUROPÄISCHE PATENTSCHRIFT

(11) **EP 3 762 689 B1**
(45) Veröffentlichungstag und Bekanntmachung des Hinweises auf die Patenterteilung: **01.05.2024**
(21) Anmeldenummer: 19709690.2
(22) Anmeldetag: 06.03.2019
(51) Int. Cl.: G01F 1/84

(54) **CORIOLISMESSGERÄT**
CORIOLIS TYPE METER
DISPOSITIF DE MESURE DU TYPE CORIOLIS

(30) Priorität: 06.03.2018 DE 102018105089
(43) Veröffentlichungstag der Anmeldung: 13.01.2021
(73) Patentinhaber: Endress + Hauser Flowtec AG, 4153 Reinach (CH)
(72) Erfinder: RAMSEYER, Severin, 4142 Münchenstein (CH); SCHWENTER, Benjamin, 4147 Aesch (CH)
(74) Vertreter: Hahn, Christian
(86) Internationale Anmeldenummer: PCT/EP2019/055567
(87) Internationale Veröffentlichungsnummer: WO 2019/170742

(56) Entgegenhaltungen:
- WO-A1-2019/149592
- DE-A1-102015 120 087
- DE-A1-102015 122 146
- DE-U1-202017 006 709
- US-A1- 2011 041 623
- US-A1- 2015 355 008
- US-B1- 6 223 605
- LEE C K ET AL: "Multilayer stacked coreless printed spiral winding inductor with wide frequency bandwidth", ENERGY CONVERSION CONGRESS AND EXPOSITION, 2009. ECCE. IEEE, IEEE, PISCATAWAY, NJ, USA, 20 September 2009 (2009-09-20), pages 1002-1009, XP031608024, ISBN: 978-1-4244-2893-9

## Beschreibung

Die Erfindung betrifft ein Coriolismessgerät zur Messung des Volumendurchflusses oder der Dichte eines durch ein Messrohr strömenden Mediums.

Mittels Coriolismessgeräten lässt sich beispielsweise die Strömungsgeschwindigkeit oder die Dichte eines durch mindestens ein Messrohr des Coriolismessgeräts strömenden Mediums erfassen, wobei ausgenutzt wird, dass dem mindestens einen Messrohr aufgeprägte Schwingungen sich in charakteristischer Weise gegenüber einer Referenz verändern. Die Schwingungen werden vorteilhafterweise über elektrische oder magnetische Vorrichtungen auf das Messrohr übertragen und auf diese Weise auch erfasst.

Solche Coriolismessgeräte werden in verschiedenen Ausführungen hergestellt, unter anderem auch in Varianten mit kompakten Messrohren, wie beispielsweise in der WO2015076676A1 gezeigt. Schwingungserreger und Schwingungssensoren sind dabei voluminös ausgestaltet, was eine weiter kompaktifizierte Bauform verhindert und mit erhöhten Materialkosten einhergeht.

Die DE202017006709U1 zeigt ein weiteres Coriolis-Messgerät mit voluminösen Spulen, wobei diese Spulen auf einer Elektronikplatine angeordnet sind.

Die DE102015120087A1 zeigt ein Coriolismessgerät, bei welchem Sensor- bzw. Erregerspulen eine LTCC-Keramik aufweisen, auf bzw. in welcher Windungen der Spule angeordnet sind.

Die US20110041623A1 zeigt ein weiteres Coriolis-Messgerät mit voluminösen Spulen, wobei diese Spulen auf einem Printed-Circuit-Board angeordnet sind.

Die DE102015122146A1 zeigt ein Coriolis-Messgerät, bei welchem Erreger und Sensoren auf einer Messrohrträgerplatte angeordnet sind.

Die US6223605B1 zeigt ein Coriolismessgerät, bei welchem ein Messrohr durch eine Stützplatte gehalten ist.

Die US20150355008A1 zeigt ein Coriolismessgerät mit einem Messrohrpaar, bei welchem Messrohrschwingungen der Messrohre relativ zueinander erfasst werden. Aufgabe der Erfindung ist es, das Coriolismessgerät kompakter und günstiger herstellbar auszugestalten.

Die Aufgabe wird gelöst durch ein Coriolismessgerät gemäß dem unabhängigen Anspruch 1.

Ein erfindungsgemäßes Coriolismessgerät zur Messung des Volumendurchflusses oder der Dichte eines durch ein Messrohr strömenden Mediums umfasst:
Das Messrohr zum Führen des Mediums;
mindestens einen Erreger, welcher dazu eingerichtet ist, das Messrohr zu Schwingungen anzuregen;
mindestens einen Sensor, welcher dazu eingerichtet ist, die Schwingungen des Messrohrs zu erfassen;
eine elektronische Mess-/Betriebsschaltung, welche dazu eingerichtet ist, den Erreger sowie den Sensor zu betreiben und Durchfluss- bzw. Dichtemesswerte zu bestimmen und auszugeben;
wobei die elektronische Mess-/Betriebsschaltung eine Elektronikplatine aufweist,
wobei mindestens ein Erreger ein feststehendes Erregerelement aufweist, und/oder
wobei mindestens ein Sensor ein feststehendes Sensorelement aufweist,
wobei zumindest ein feststehendes Erregerelement und/oder zumindest ein feststehendes Sensorelement in die Elektronikplatine integriert ist,
wobei auf der Elektronikplatine des Weiteren Elektronikbausteine der elektronischen Mess-/Betriebsschaltung zum Betreiben des Coriolismessgeräts angeordnet sind.

In einer Ausgestaltung weist das feststehende Erregerelement bzw. das feststehende Sensorelement eine Spule auf.

In einer Ausgestaltung weist mindestens ein Erreger ein bewegliches Erregerelement auf, und/oder wobei mindestens ein Sensor ein bewegliches Sensorelement aufweist, wobei das bewegliche Erregerelement bzw. das bewegliche Sensorelement am Messrohr angeordnet ist und dessen Schwingungsbewegungen folgt.

In einer Ausgestaltung ist das bewegliche Erregerelement oder das bewegliche Sensorelement ein Permanentmagnet oder Elektromagnet, welcher dazu eingerichtet ist, sich entlang einer Spulenachse der zugehörigen Spule senkrecht zur Spule zu bewegen.

In einer Ausgestaltung schließt die Spule entlang ihrer Spulenachse zwischen Stirnflächen der Spule ein Innenvolumen ein, wobei das Innenvolumen einen Zentralbereich und zwei den Zentralbereich einschließende Außenbereiche aufweist,
wobei das bewegliche Erregerelement eine der Spule zugewandte Seitenfläche aufweist, wobei das bewegliche Erregerelement so am Messrohr angeordnet ist, dass die Seitenfläche in einem Ruhezustand des Messrohrs im Zentralbereich befindlich ist.

Auf diese Art und Weise ist sichergestellt, dass eine maximale Kraft auf das Erregerelement ausgeübt wird, bzw. eine maximale Empfindlichkeit der Spule bezüglich einer Bewegung des beweglichen Sensorelements sichergestellt ist.

In einer Ausgestaltung weist die Spule Windungen auf und ist dazu eingerichtet, ein Magnetfeld entlang der Spulenachse senkrecht zur Elektronikplatine zu erzeugen, wobei die Anzahl der Windungen größer als 10, und insbesondere größer als 30 und bevorzugt größer als 100 ist.

Je größer die Windungsanzahl ist, desto stärker ist eine elektromagnetische Kopplung zwischen feststehendem Erreger- bzw. Sensorelement und beweglichem Erreger- bzw. Sensorelement.

In einer Ausgestaltung ist die Elektronikplatine eine Multilayerplatine weist und eine Mehrzahl von Leiterplattenschichten auf, welche Leiterplattenschichten gestapelt und über Seitenflächen mit benachbarten Leiterplattenschichten verbunden sind,
wobei die Spule mehrere Teilspulen und mindestens zwei Spulenkontaktierungen aufweist, welche Teilspulen jeweils auf verschiedenen Seitenflächen angeordnet sind, wobei jeweils eine Spulenkontaktierung an einem Ende der Spule angeordnet ist, und wobei die Leiterplatte erste Durchkontaktierungen aufweist, welche dazu eingerichtet sind, benachbarte Teilspulen elektrisch miteinander zu verbinden. Auf diese Weise lässt sich das feststehende Sensor- bzw. Erregerelement besonders kompakt aufbauen.

In einer Ausgestaltung sind auf der Elektronikplatine des Weiteren Elektronikkomponenten der elektronischen Mess-/Betriebsschaltung zum Betreiben des Coriolismessgeräts angeordnet.

In einer Ausgestaltung ist die Spule mit der elektronischen Mess-/Betriebsschaltung mittels auf oder in der Elektronikplatine angeordneter elektrisch leitenden Verbindungen verbunden.

In einer Ausgestaltung ist das Messgerät ein Gehäuse mit einer Gehäusewandung aufweist, wobei die Gehäusewandung eine Gehäusekammer einschließt, wobei das Gehäuse zumindest zwei an der Gehäusewandung angebrachte Messrohrdurchführungen umfasst,
wobei das Gehäuse dazu eingerichtet ist, das Messrohr zumindest zwischen den Messrohrdurchführungen sowie die Elektronikplatine zu behausen.

In einer Ausgestaltung weist das Coriolismessgerät eine Gegenschwingplatte auf, welche dazu eingerichtet ist entgegengesetzt zum Messrohr zu schwingen,
wobei auf der Gegenschwingplatte Messrohrhalterungen angeordnet sind, welche dazu eingerichtet sind, dass Messrohr zu lagern, wobei das Messrohr dazu eingerichtet ist, zwischen den Messrohrhalterungen zu schwingen,
wobei die Gegenschwingplatte schwingungsdämpfend an der Gehäusewandung mittels Lagerungen gelagert ist.

In einer Ausgestaltung umfasst das Messrohr einen Einlauf mit einem Einlaufende und einen Auslauf mit einem Auslaufende, wobei das Einlaufende und das Auslaufende insbesondere schwingungsdämpfend durch die Messrohrdurchführungen geführt sind.

In einer Ausgestaltung ist die Elektronikplatine schwingungsdämpfend an der Gehäusewandung gelagert.

In einer Ausgestaltung weist der Permanentmagnet senkrecht zu einer Längsachse eine radiale Ausdehnung größer als 0.1 mm und bevorzugt größer als 0.2 mm und insbesondere größer als 0.3 mm und kleiner als 5 mm und bevorzugt kleiner als 4 mm und insbesondere kleiner als 3 mm auf,
wobei die Spule einen Innendurchmesser aufweist, welcher mindestens 0.1 mm und bevorzugt mindestens 0.2 mm und insbesondere mindestens 0.3 mm größer ist als die radiale Ausdehnung und/oder höchstens 1 mm, und bevorzugt höchstens 0.8 mm und insbesondere höchstens 0.7 mm.

In einer Ausgestaltung ist das Coriolismessgerät ein Einrohrcoriolismessgerät, wobei das Messrohr zwischen den Messrohrhalterungen mindestens zwei Biegungen aufweist, welche Biegungen bezüglich eines jeweiligen Biegungszentrums einen Bogenwinkel von mindestens 120 Grad und insbesondere mindestens 135 Grad und bevorzugt mindestens 150 Grad einschließen.

Diese Messrohrbauform ist besonders kompakt.

Im Folgenden wird die Erfindung anhand von Ausführungsbeispielen beschrieben.

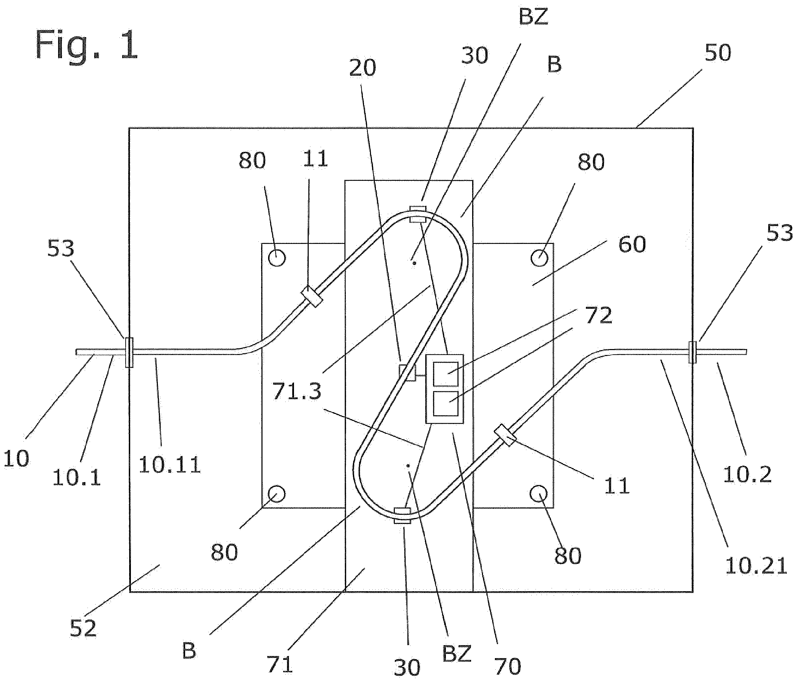

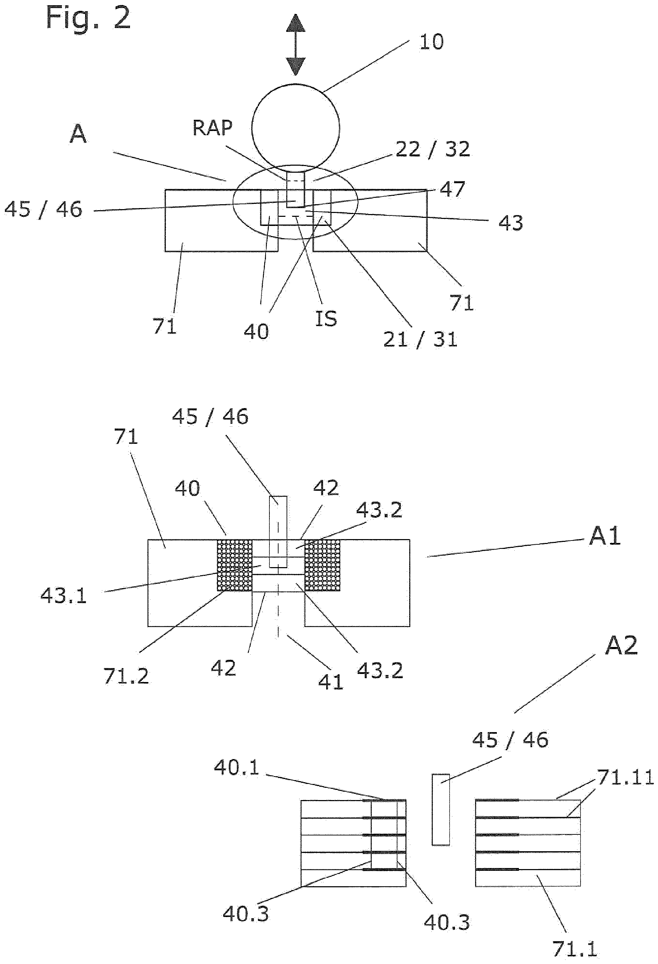

Fig. 1 skizziert einen schematischen Aufbau eines erfindungsgemäßen Coriolismessgeräts, und Fig. 2 skizziert einen schematischen Detailausschnitt eines erfindungsgemäßen Durchflussmessgeräts mit zwei beispielhaften Ausführungsformen.

Fig. 1 zeigt den Aufbau eines erfindungsgemäßen Coriolismessgeräts 1 mit einem Messrohr 10, einer Elektronikplatine 71 und einer Gegenschwingplatte 60. Das Messrohr ist mittels Messrohrhalterungen 11 auf der Gegenschwingplatte 71 angeordnet und durch diese Messrohrhalterungen gehalten. Die Elektronikplatine weist einen Erreger 20 zum Erzeugen von Messrohrschwingungen auf, und zwei Sensoren 30 zum Erfassen der durch den Erreger erzeugten Messrohrschwingungen. Die Anzahl der Erreger sowie der Sensoren ist beispielhaft und nicht beschränkend auszulegen. Das Coriolismessgerät weist eine elektronische Mess-/Betriebsschaltung 70 mit Elektronikbausteinen 72 auf, welche Elektronikbausteine auf der Elektronikplatine 71 angeordnet sind. Die elektronische Mess-/Betriebsschaltung ist dazu eingerichtet, den Erreger sowie den Sensor zu betreiben und Durchfluss- bzw. Dichtemesswerte zu bestimmen und auszugeben.

Die elektronische Mess-/Betriebsschaltung ist dabei mittels elektrisch leitenden Verbindungen 71.3 mit dem Erreger bzw. den Sensoren verbunden. Die Elektronikplatine ist dabei in ein einer Gehäusekammer 52 eines Gehäuses 50 angeordnet, welche Gehäusekammer durch eine Gehäusewandung 51 ausgebildet ist. Die Elektronikplatine 71 ist dabei an der Gehäusewandung 51 angebracht, wobei bevorzugt eine schwingungsdämpfende Lagerung der Elektronikplatine an der Gehäusewandung eingerichtet ist, so dass die Elektronikplatine und das Gehäuse vibratorisch entkoppelt sind. Die Messrohrhalterungen 11 sind an der Gegenschwingplatte 60 angebracht und können schwingungsdämpfend wirken. Die Gegenschwingplatte ist mittels Lagerungen 80 schwingungsdämpfend an der Gehäusewandung gelagert.

Das Messrohr ist dabei dazu eingerichtet, zwischen den Messrohrhalterungen 11 zu schwingen. Das Messrohr weist einen stromaufwärts gerichteten Einlauf 10.1 mit einem Einlaufende 10.11 und einen stromabwärts gerichteten Auslauf 10.2 mit Auslaufende 10.21 auf, wobei das Messrohr mittels des Einlaufendes bzw. Auslaufendes durch Messrohrdurchführungen 53 in der Gehäusewandung 51 geführt ist, wobei die Messrohrdurchführungen idealerweise schwingungsdämpfend sind und das Messrohr akustisch vom Gehäuse und von einer Umgebung entkoppeln. Das Messrohr weist dabei bezüglich jeweils eines Biegezentrums BZ Biegungen B auf, welche bezüglich des jeweiligen Biegezentrums einen Bogenwinkel von mindestens 120 Grad und insbesondere mindestens 135 Grad und bevorzugt mindestens 150 Grad einschließen. Auf diese Weise lässt sich das Coriolismessgerät kompakt ausgestalten. Erfindungsgemäße Ausgestaltungen des Erregers bzw. Sensors sind in Fig. 2 dargestellt.

Fig. 2 skizziert schematisch den Aufbau eines erfindungsgemäßen Erregers 20 bzw. Sensors 20 und dessen Anordnung bzgl. der Elektronikplatine 71 und des Messrohrs 10. Ein erfindungsgemäßer Erreger 20 bzw. erfindungsgemäßer Sensor 30 weist ein bewegliches Erregerelement 22 bzw. bewegliches Sensorelement 32 sowie ein feststehendes Erregerelement 21 bzw. feststehendes Sensorelement 31 auf, wobei das bewegliche Erreger- bzw. Sensorelement am Messrohr angeordnet ist und dessen Schwingungsbewegungen folgt, und wobei das feststehende Erreger- bzw. Sensorelement in die Elektronikplatine integriert ist. Das in die Elektronikplatine integrierte feststehende Erreger- bzw. Sensorelement ist dabei eine Spule 40, das bewegliche Erreger- bzw. Sensorelement ist dabei ein Permanentmagnet 45 oder ein Elektromagnet 46. Der Permanentmagnet bzw. Elektromagnet taucht dabei in ein Innenvolumen 43 der Spule ein und weist eine der Spule zugewandte Seitenfläche 47 auf, wobei ein Innendurchmesser IS der Spule mindestens 0.1 mm und bevorzugt mindestens 0.2 mm und insbesondere mindestens 0.3 mm größer ist als eine radiale Ausdehnung RAP des Permanentmagnets. Der Permanentmagnet weist senkrecht zu einer Längsachse eine radiale Ausdehnung RAP größer als 0.1 mm und bevorzugt größer als 0.2 mm und insbesondere größer als 0.3 mm und kleiner als 5 mm und bevorzugt kleiner als 4 mm und insbesondere kleiner als 3 mm auf.

Die Ausschnittsvergrößerungen A1 und A2 zeigen zwei beispielhafte Ausgestaltungen des mit A umgrenzten Ausschnitts der Aufbauskizze des Erregers bzw. Sensors. A1 zeigt eine Ausgestaltung, bei welcher die Spule in einer Aussparung 71.2 der Elektronikplatine 71 angebracht ist. Die Spule schließt dabei mittels ihrer Stirnflächen 42 ein Innenvolumen 43 ein, wobei das Innenvolumen 43 einen Zentralbereich 43.1 und zwei den Zentralbereich einschließenden Außenbereiche 43.2 aufweist. In einem Ruhezustand des Messrohrs befindet sich die Seitenfläche 47 im Zentralbereich 43.1. Damit ist sichergestellt, dass einerseits bei einem Erreger eine maximale Kraft auf das bewegliche Erregerelement ausgeübt wird und andererseits bei einem Sensor eine maximale Induktion einer elektrischen Spannung in der Spule stattfindet. Alternativ zu der in A1 gezeigten Ausführung kann wie in A2 gezeigt die Spule auch auf die Elektronikplatine aufgebracht sein. Die Elektronikplatine kann wie hier gezeigt mehrere Leiterplattenschichten 71.1 aufweisen, wobei mehrere der Leiterplattenschichten jeweils eine Teilspule 40.1 aufweisen, welche Teilspulen mittels Durchkontaktierungen 40.3 elektrisch verbunden sind. Äquivalent zu A1 schließt die Spule ein Innenvolumen ein, welches aus Gründen der Übersichtlichkeit nicht gekennzeichnet ist.

### Bezugszeichenliste

- 1: Coriolismessgerät
- 10: Messrohr
- 10.1: Einlauf
- 10.11: Einlaufende
- 10.2: Auslauf
- 10.21: Auslaufende
- 11: Messrohrhalterung
- 20: Erreger
- 21: feststehendes Erregerelement
- 22: bewegliches Erregerelement
- 30: Sensor
- 31: feststehendes Sensorelement
- 32: bewegliches Sensorelement
- 40: Spule
- 40.1: Teilspule
- 40.2: Spulenkontaktierung
- 40.3: Durchkontaktierung
- 41: Spulenachse
- 42: Stirnflächen
- 43: Innenvolumen
- 43.1: Zentralbereich
- 43.2: Außenbereich
- 45: Permanentmagnet
- 46: Elektromagnet
- 47: Seitenfläche
- 50: Gehäuse
- 51: Gehäusewandung
- 52: Gehäusekammer
- 53: Messrohrdurchführung
- 60: Gegenschwingplatte
- 70: Elektronische Mess-/Betriebsschaltung
- 71: Elektronikplatine
- 71.1: Leiterplattenschichten
- 71.11: Seitenflächen der Leiterplattenschichten
- 71.2: Aussparung
- 71.3: Elektrisch leitende Verbindung
- 72: Elektronikbaustein
- 80: Lagerung
- RAP: radiale Ausdehnung Permanentmagnet
- IS: Innendurchmesser Spule
- B: Biegung
- BZ: Biegezentrum

## Patentansprüche

1. Coriolismessgerät (1) zur Messung des Volumendurchflusses oder der Dichte eines durch ein Messrohr strömenden Mediums umfassend:
das Messrohr (10) zum Führen des Mediums;
mindestens einen Erreger (20), welcher dazu eingerichtet ist, das Messrohr zu Schwingungen anzuregen;
mindestens einen Sensor (30), welcher dazu eingerichtet ist, die Schwingungen des Messrohrs zu erfassen;
eine elektronische Mess-/Betriebsschaltung (70), welche dazu eingerichtet ist, den Erreger sowie den Sensor zu betreiben und Durchfluss- bzw. Dichtemesswerte zu bestimmen und auszugeben;
wobei die elektronische Mess-/Betriebsschaltung (70) eine Elektronikplatine (71) aufweist,
wobei mindestens ein Erreger ein feststehendes Erregerelement (21) aufweist, und/oder wobei mindestens ein Sensor ein feststehendes Sensorelement (31) aufweist,
wobei zumindest ein feststehendes Erregerelement und/oder zumindest ein feststehendes Sensorelement in die Elektronikplatine (71) integriert ist,
wobei auf der Elektronikplatine (71) des Weiteren Elektronikbausteine (72) der elektronischen Mess-/Betriebsschaltung (70) zum Betreiben des Coriolismessgeräts angeordnet sind,
wobei das feststehende Erregerelement bzw. das feststehende Sensorelement eine Spule (40) aufweist;
und wobei die Spule Windungen aufweist und dazu eingerichtet ist, ein Magnetfeld entlang der Spulenachse senkrecht zur Elektronikplatine zu erzeugen, wobei die Anzahl der Windungen größer als 10, insbesondere größer als 30, ist,
**dadurch gekennzeichnet,**
**daß** die Elektronikplatine (71) eine Multilayerplatine ist und eine Mehrzahl von Leiterplattenschichten (71.1) aufweist, welche Leiterplattenschichten gestapelt und über Seitenflächen (71.11) der Leiterplattenschichten mit benachbarten Leiterplattenschichten verbunden sind,
**und daß** die Spule (40) mehrere Teilspulen (40.1) und mindestens zwei Spulenkontaktierungen (40.2) aufweist, welche Teilspulen jeweils auf verschiedenen Seitenflächen angeordnet sind, wobei jeweils eine Spulenkontaktierung an einem Ende der Spule angeordnet ist, und wobei die Leiterplatte erste Durchkontaktierungen aufweist, welche dazu eingerichtet sind, benachbarte Teilspulen elektrisch miteinander zu verbinden.

2. Coriolismessgerät nach Anspruch 1,
wobei mindestens ein Erreger ein bewegliches Erregerelement (22) aufweist,
wobei mindestens ein Sensor ein bewegliches Sensorelement (32) aufweist,
wobei das bewegliche Erregerelement bzw. das bewegliche Sensorelement am Messrohr angeordnet ist und dessen Schwingungsbewegungen folgt.

3. Coriolismessgerät nach Anspruch 2,
wobei das bewegliche Erregerelement oder das bewegliche Sensorelement ein Permanentmagnet (45) oder Elektromagnet (46) ist, welcher dazu eingerichtet ist, sich entlang einer Spulenachse (41) der zugehörigen Spule senkrecht zur Spule zu bewegen.

4. Coriolismessgerät nach Anspruch 3,
wobei die Spule entlang ihrer Spulenachse zwischen Stirnflächen (42) der Spule (40) ein Innenvolumen (43) einschließt,
wobei das Innenvolumen einen Zentralbereich (43.1) und zwei den Zentralbereich einschließende Außenbereiche (43.2) aufweist,
wobei das bewegliche Erregerelement bzw. das bewegliche Sensorelement eine der Spule zugewandte Seitenfläche (47) aufweist,
wobei das bewegliche Erregerelement so am Messrohr angeordnet ist, dass die Seitenfläche in einem Ruhezustand des Messrohrs im Zentralbereich befindlich ist.

5. (Geändert) Coriolismessgerät nach einem der vorherigen Ansprüche,
wobei die Spule mit der elektronischen Mess-/Betriebsschaltung mittels auf oder in der Elektronikplatine angeordneter elektrisch leitenden Verbindungen (71.3) verbunden ist.

6. Coriolismessgerät nach einem der vorigen Ansprüche,
wobei das Messgerät ein Gehäuse (50) mit einer Gehäusewandung (51) aufweist, wobei die Gehäusewandung eine Gehäusekammer (52) einschließt,
wobei das Gehäuse zumindest zwei an der Gehäusewandung angebrachte Messrohrdurchführungen (53) umfasst,
wobei das Gehäuse dazu eingerichtet ist, das Messrohr zumindest zwischen den Messrohrdurchführungen sowie die Elektronikplatine und zu behausen.

7. Coriolismessgerät nach dem vorherigen Anspruch,
wobei das Coriolismessgerät eine Gegenschwingplatte (60) aufweist, welche in der Gehäusekammer angeordnet ist,
wobei die Gegenschwingplatte dazu eingerichtet ist, entgegengesetzt zum Messrohr zu schwingen,
wobei auf der Gegenschwingplatte (60) Messrohrhalterungen (11) angeordnet sind, welche dazu eingerichtet sind, dass Messrohr zu lagern,
wobei das Messrohr dazu eingerichtet ist, zwischen den Messrohrhalterungen zu schwingen,
wobei die Gegenschwingplatte schwingungsdämpfend an der Gehäusewandung mittels Lagerungen (80) gelagert ist.

8. Coriolismessgerät nach einem der Ansprüche 5 bis 7,
wobei das Messrohr einen Einlauf (10.1) mit einem Einlaufende (10.11) und einen Auslauf (10.2) mit einem Auslaufende (10.21) umfasst, wobei das Einlaufende und das Auslaufende, insbesondere schwingungsdämpfend, durch die Messrohrdurchführungen (53) geführt sind.

9. Coriolismessgerät nach einem der vorigen Ansprüche,
wobei der Permanentmagnet senkrecht zu einer Längsachse eine radiale Ausdehnung (RAP) größer als 0.1 mm, insb. größer als 0.2 mm, und kleiner als 5 mm, insb. kleiner als 4 mm, aufweist,
wobei die Spule einen Innendurchmesser (IS) aufweist, welcher mindestens 0.1 mm, insb. mindestens 0.2 mm, größer ist als die radiale Ausdehnung.

10. Coriolismessgerät nach einem der Ansprüche,
wobei das Coriolismessgerät ein Einrohrcoriolismessgerät ist, wobei das Messrohr zwischen den Messrohrhalterungen mindestens zwei Biegungen (B) aufweist, welche Biegungen bezüglich eines jeweiligen Biegungszentrums (BZ) einen Bogenwinkel von mindestens 120 Grad, insbesondere mindestens 135 Grad, einschließen.

## Claims

1. A Coriolis measuring device (1) for measuring the volume flow or the density of a medium flowing through a measuring tube, comprising:
The measuring tube (10) for conducting the medium;
at least one exciter (20), which is configured to cause the measuring tube to oscillate;
at least one sensor (30), which is configured to detect the oscillations of the measuring tube;
an electronic measuring/operating circuit (70), which is configured to operate the exciter and the sensor, and to determine and output flow or density values,
wherein the electronic measuring/operating circuit (70) has an electronic PCB (71),
wherein at least one exciter has a fixed exciter element (21), and/or wherein at least one sensor has a fixed sensor element (31),
wherein at least one fixed exciter element and/or at least one fixed sensor element is integrated into the electronic PCB (71),
wherein electronic modules (72) of the electronic measuring/operating circuit (70) are furthermore arranged on the electronic PCB (71) for operating the Coriolis measuring device, wherein the fixed exciter element or the fixed sensor element has a coil (40);
and wherein the coil has turns and is configured to generate a magnetic field along the coil axis perpendicular to the electronic PCB, wherein the number of turns is greater than 10, in particular greater than 30,
**characterized**
**in that** the electronic PCB (71) is a multilayer PCB and has a number of PCB layers (71.1), said PCB layers being stacked and connected to adjacent PCB layers via lateral surfaces (71.11) of the PCB layers,
**and in that** the coil (40) has multiple partial coils (40.1) and at least two coil contacts (40.2), said partial coils each being arranged on different lateral surfaces, wherein a coil contact is arranged at each end of the coil, and wherein the PCB has first plated through-holes, which are configured to electrically connect adjacent partial coils.

2. The Coriolis measuring device as claimed in claim 1,
wherein at least one exciter has a moving exciter element (22), wherein at least one sensor has a moving sensor element (32),
wherein the moving exciter element or the moving sensor element is arranged on the measuring tube and follows its oscillating movements.

3. The Coriolis measuring device as claimed in claim 2,
wherein the moving exciter element or the moving sensor element is a permanent magnet (45) or electromagnet (46), which is configured to move along a coil axis (41) of the relevant coil perpendicular to the coil.

4. The Coriolis measuring device as claimed in claim 3,
wherein the coil encloses an internal volume (43) along its coil axis between end faces (42) of the coil (40),
wherein the internal volume has a central area (43.1) and two outer areas (43.2) which surround the central area,
wherein the moving exciter element or the moving sensor element has a lateral surface (47) facing the coil,
wherein the moving exciter element is arranged on the measuring tube in such a way that the lateral surface is located in the central area when the measuring tube is in a non-operating state.

5. (Amended) The Coriolis measuring device as claimed in one of the preceding claims,
wherein the coil is connected to the electronic measuring/operating circuit by means of electrically conductive connections (71.3) arranged on or in the electronic PCB.

6. The Coriolis measuring device as claimed in one of the preceding claims,
wherein the measuring device has a housing (50) with a housing wall (51), wherein the housing wall encloses a housing chamber (52),
wherein the housing comprises at least two measuring tube feed-throughs (53) attached to the housing wall,
wherein the housing is configured to house the measuring tube at least between the measuring tube feed-throughs and the electronic PCB.

7. The Coriolis measuring device as claimed in the preceding claim,
wherein the Coriolis measuring device has a counter-oscillation plate (60), which is arranged in the housing chamber,
wherein the counter-oscillation plate is configured to oscillate in the opposite direction to the measuring tube,
wherein measuring tube holders (11) are arranged on the counter-oscillation plate (60), said measuring tube holders being configured to support the measuring tube,
wherein the measuring tube is configured to oscillate between the measuring tube holders,
wherein the counter-oscillation plate is mounted on the housing wall using supports (80) in such a way as to dampen oscillations.

8. The Coriolis measuring device as claimed in one of claims 5 to 7,
wherein the measuring tube comprises an inlet (10.1) with an inlet end (10.11) and an outlet (10.2) with an outlet end (10.21), wherein the inlet end and the outlet end are guided through the measuring tube feed-throughs (53), in particular in such a way as to dampen oscillations.

9. The Coriolis measuring device as claimed in one of the preceding claims,
wherein the permanent magnet perpendicular to a longitudinal axis has a radial expansion (RAP) greater than 0.1 mm, in particular greater than 0.2 mm, and less than 5 mm, in particular less than 4 mm,
wherein the coil has an internal diameter (IS), which is at least 0.1 mm, in particular at least 0.2 mm, greater than the radial expansion.

10. The Coriolis measuring device as claimed in one of the claims,
wherein the Coriolis measuring device is a single-tube measuring device, wherein the measuring tube has at least two curves (B) between the measuring tube holders, said curves forming a bend angle of at least 120 degrees, in particular at least 135 degrees, relative to the center of each curve (BZ).

## Revendications

1. Débitmètre Coriolis (1) destiné à la mesure du débit volumique ou de la densité d'un produit s'écoulant à travers un tube de mesure, lequel débitmètre comprend :
le tube de mesure (10) destiné à guider le produit ;
au moins un excitateur (20), lequel est conçu pour faire vibrer le tube de mesure ;
au moins un capteur (30), lequel est conçu pour mesurer les vibrations du tube de mesure ;
un circuit électronique de mesure/d'exploitation (70), lequel est conçu pour exploiter l'excitateur ainsi que le capteur et pour déterminer et délivrer des valeurs mesurées de débit ou de densité ;
le circuit électronique de mesure/d'exploitation (70) comprenant une carte électronique (71),
au moins un excitateur présentant un élément d'excitation fixe (21), et/ou au moins un capteur présentant un élément capteur fixe (31),
au moins un élément d'excitation fixe et/ou au moins un élément capteur fixe étant intégré dans la carte électronique (71),
des composants électroniques (72) du circuit électronique de mesure/d'exploitation (70) pour l'exploitation du débitmètre Coriolis étant en outre disposés sur la carte électronique (71),
l'élément d'excitation fixe ou l'élément capteur fixe présentant une bobine (40) ;
et la bobine présentant des spires et étant conçue pour générer un champ magnétique le long de l'axe de la bobine de manière perpendiculaire à la carte électronique, le nombre de spires étant supérieur à 10, notamment supérieur à 30,
**caractérisé en ce**
**que** la carte électronique (71) est une carte multicouche et comprend une pluralité de couches de circuits imprimés (71.1), lesquelles couches de circuits imprimés sont empilées et reliées à des couches de circuits imprimés voisines par l'intermédiaire de surfaces latérales (71.11) des couches de circuits imprimés,
**et en ce que** la bobine (40) comporte plusieurs bobines partielles (40.1) et au moins deux contacts de bobine (40.2), lesquelles bobines partielles sont respectivement disposées sur différentes surfaces latérales, un contact de bobine étant respectivement disposé à une extrémité de la bobine, et la carte de circuit imprimé présentant des premiers contacts traversants, lesquels sont conçus pour relier électriquement entre elles des bobines partielles voisines.

2. Débitmètre Coriolis selon la revendication 1,
pour lequel au moins un excitateur comprend un élément d'excitation mobile (22), au moins un capteur présentant un élément capteur mobile (32),
l'élément d'excitation mobile ou l'élément capteur mobile étant disposé sur le tube de mesure et suivant les mouvements de vibration de celui-ci.

3. Débitmètre Coriolis selon la revendication 2,
pour lequel l'élément d'excitation mobile ou l'élément capteur mobile est un aimant permanent (45) ou un électroaimant (46) qui est conçu pour se déplacer le long d'un axe de bobine (41) de la bobine associée, perpendiculairement à la bobine.

4. Débitmètre Coriolis selon la revendication 3,
pour lequel la bobine enferme un volume intérieur (43) le long de son axe de bobine entre des surfaces frontales (42) de la bobine (40),
le volume intérieur présentant une zone centrale (43.1) et deux zones extérieures (43.2) entourant la zone centrale,
l'élément d'excitation mobile ou l'élément capteur mobile présentant une surface latérale (47) tournée vers la bobine,
l'élément d'excitation mobile étant disposé sur le tube de mesure de telle sorte que la surface latérale se trouve dans la zone centrale dans un état de repos du tube de mesure.

5. (Modifiée) Débitmètre Coriolis selon l'une des revendications précédentes,
pour lequel la bobine est reliée au circuit électronique de mesure/d'exploitation au moyen de connexions électriquement conductrices (71.3) disposées sur ou dans la carte électronique.

6. Débitmètre Coriolis selon l'une des revendications précédentes,
pour lequel le débitmètre comprend un boîtier (50) avec une paroi de boîtier (51), la paroi de boîtier renfermant une chambre de boîtier (52),
le boîtier comprenant au moins deux traversées de tube de mesure (53) fixées à la paroi de boîtier,
le boîtier étant conçu pour loger le tube de mesure au moins entre les traversées de tube de mesure ainsi que la carte électronique.

7. Débitmètre Coriolis selon la revendication précédente,
pour lequel le débitmètre Coriolis comprend une plaque de contre-vibration (60), laquelle est disposée dans la chambre de boîtier,
la plaque de contre-vibration étant conçue pour vibrer en sens inverse du tube de mesure,
des supports de tube de mesure (11) étant disposés sur la plaque de contre-vibration (60), lesquels supports sont conçus pour supporter le tube de mesure,
le tube de mesure étant conçu pour vibrer entre les supports de tube de mesure,
la plaque de contre-vibration étant montée sur la paroi du boîtier au moyen de paliers (80) de manière à amortir les vibrations.

8. Débitmètre Coriolis selon l'une des revendications 5 à 7,
pour lequel le tube de mesure comprend une entrée (10.1) avec une extrémité d'entrée (10.11) et une sortie (10.2) avec une extrémité de sortie (10.21), l'extrémité d'entrée et l'extrémité de sortie étant guidées, notamment de manière à amortir les vibrations, à travers les traversées de tube de mesure (53).

9. Débitmètre Coriolis selon l'une des revendications précédentes,
pour lequel l'aimant permanent présente, perpendiculairement à un axe longitudinal, une extension radiale (RAP) supérieure à 0,1 mm, notamment supérieure à 0,2 mm, et inférieure à 5 mm, notamment inférieure à 4 mm,
la bobine présentant un diamètre intérieur (IS) qui est supérieur d'au moins 0,1 mm, notamment d'au moins 0,2 mm, à l'extension radiale.

10. Débitmètre Coriolis selon l'une des revendications,
pour lequel le débitmètre Coriolis est un débitmètre Coriolis à tube unique, le tube de mesure présentant entre les supports de tube de mesure au moins deux courbures (B), lesquelles courbures forment par rapport à un centre de courbure respectif (BZ) un angle d'arc d'au moins 120 degrés, notamment d'au moins 135 degrés.
